# EUROPEAN PATENT APPLICATION

(11) **EP 1 769 890 A2**
(43) Date of publication of application: **04.04.2007**
(21) Application number: 06018967.7
(22) Date of filing: 11.09.2006
(51) Int. Cl.: B25J 9/16

(54) **Robot simulation device**

(30) Priority: 28.09.2005 JP 2005282295
(71) Applicant: FANUC LTD, Minamitsuru-gun, Yamanashi 401-0597 (JP)
(72) Inventor: Kobayashi, Hirohiko, Fujiyoshida-shi Yamanashi 403-0004 (JP); Nagatsuka, Yoshiharu FANUC, Minamitsuru-gun Yamanashi 401-0511 (JP)
(74) Representative: Thum, Bernhard

(57) **Abstract**

A simulation device, for a robot, capable of judging off-line whether an article around an object to be detected interferes with the scope of a vision sensor during a measurement operation using the vision sensor, whereby the workload on an operator in the field may be reduced. Models of the scope of the vision sensor and the article, which may interfere with the scope of the vision sensor, are indicated on a display so as to indicate the occurrence of interference. This indication is based on whether at least a part of the article exists within the space defined by the scope of the vision sensor.

## Description

### RELATED APPLICATIONS

The present application claims priority from Japanese Patent Application No. 2005-282295, filed on September 28, 2005, the entire content of which is fully incorporated herein by reference.

### BACKGROUND OF THE INVENTION

### 1. Field of the Invention

The present invention relates to a simulation device, for simulating a robot program including a detecting operation, using a vision sensor mounted to a robot.

### 2. Description of the Related Art

When a robot program is simulated, in addition to the simulation of the motion of a robot, the simulation of a detecting operation by means of a vision sensor may be also performed. For example, Japanese Unexamined Patent Publication No. 2005-135278 discloses a simulation device for simulating the motion of a robot, in which three-dimensional models of the robot, a workpiece and a vision sensor are indicated on a display. This simulation device is capable of indicating a three-dimensional model of the scope of the vision sensor so as to facilitate the determination of a reference point on an object to be measured and the position and the orientation of the robot for detecting the reference point.

In the above simulation device, however, it is not checked whether an obstacle exists within the scope of the vision sensor when the detection by the sensor is performed. Therefore, the existence of an obstacle may be found only after a camera or the like is used for imaging the object in the field. In this case, it is necessary to correct teaching points in the robot program to avoid interference between the robot and the obstacle. The work for correcting the teaching points takes a long time, as the work is generally carried out in the field by trial and error.

### SUMMARY OF THE INVENTION

Accordingly, it is an object of the present invention to provide a simulation device for a robot in which the existence of an obstacle, which may interfere with the scope of a vision sensor when the vision sensor is used for the measurement, is judged off-line so as to reduce the workload of an operator in the field.

To this end, according to the present invention, there is provided a simulation device, for a robot, for simulating the motion of the robot off-line and the detection of an object by means of a vision sensor, the simulation device comprising: a display means for indicating images of the object, the vision sensor and an article around the object, and an image of a modeled scope of the vision sensor; and a judging means for judging whether the article around the object interferes with the modeled scope of the vision sensor, based on the images indicated on the display means.

The simulation device may further comprise a correcting means for correcting the position of the image of the vision sensor on the display means so as to avoid interference between the article around the object and the modeled scope of the vision sensor, when the judging means judges that the article around the object interferes with the modeled scope of the vision sensor.

### BRIEF DESCRIPTION OF THE DRAWINGS

The above and other objects, features and advantages of the present invention will be made more apparent by the following description, of preferred embodiments thereof, with reference to the accompanying drawings, wherein:
Fig. 1 shows a schematic constitution of a simulation device for a robot according to the invention;
Fig. 2 shows a modeled scope of a camera;
Fig. 3 is a flowchart indicating the procedure of the simulation device;
Fig. 4 is a diagram showing the state in which an article around an object to be measured interferes with the scope of the camera;
Fig. 5 is a diagram showing the state in which the camera is moved so as to avoid interference;
Fig. 6 shows an example of a window capable of being indicated on a display of the simulation device; and
Fig. 7 shows another example of the window capable of being indicated on the display of the simulation device.

### DETAILED DESCRIPTIONS

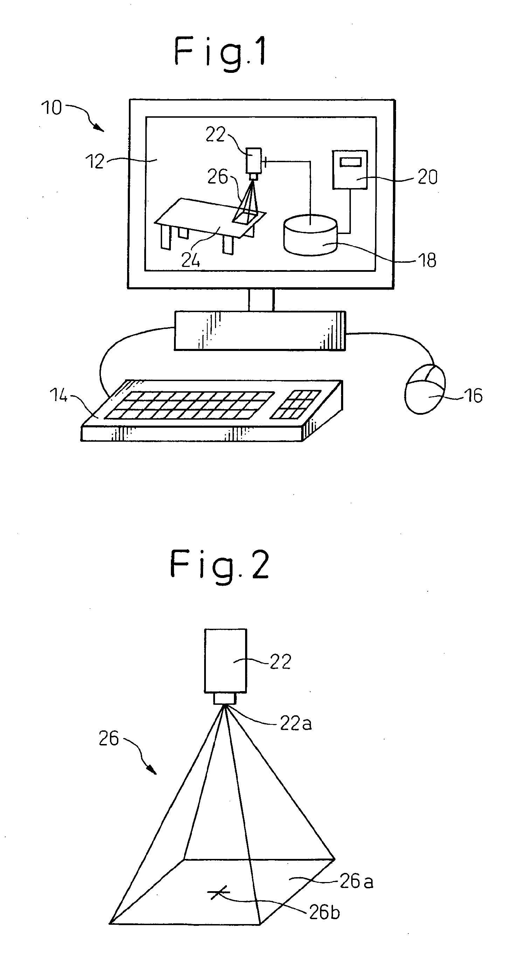

The present invention will be described below with reference to the drawings. Fig. 1 shows a schematic constitution of a simulation device 10 for a robot according to the invention. In this embodiment, the simulation device 10 may be a conventional personal computer having a display 12, a keyboard 14 and a mouse 16 and each means according to the invention may be included in the computer. The display 12 indicates images of three-dimensional models of a robot 18 to be simulated, a robot controller 20 for controlling the robot 18, a vision sensor or a camera 22 mounted on the robot 18 and an object 24 to be measured or imaged by using the camera 22. Also, the display 12 indicates an image of the scope 26 of the camera 22 which is configured by modeling an actual scope (or an imaging area) of the camera 22.

Fig. 2 shows the modeled scope 26 of the camera 22. The modeled scope 26 is configured based on the shape of the imaging area of the camera 22. Therefore, when the shape of the imaging area of the camera 22 is a square, the modeled scope 26 has the shape of a square pyramid having an apex 22a which coincides with a reference point (for example, the center of a lens) of the camera 22.

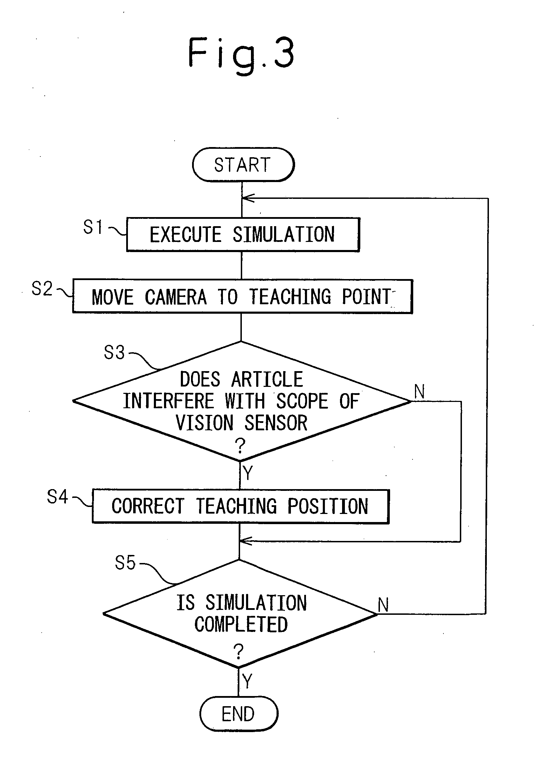

Fig. 3 is a flowchart indicating the procedure of the simulation device 10. First, by using the simulation device 10, a robot program for the robot is simulated off-line (step S1). When the object 24 is to be measured or imaged by the camera 22, as shown in Fig. 1, the camera 22 indicated on the display 12 is moved to a teaching point where the camera 22 can image the object 24 (step S2). At this point, the modeled scope 26 of the camera 22 as shown in Fig. 2 is also indicated on the display 12.

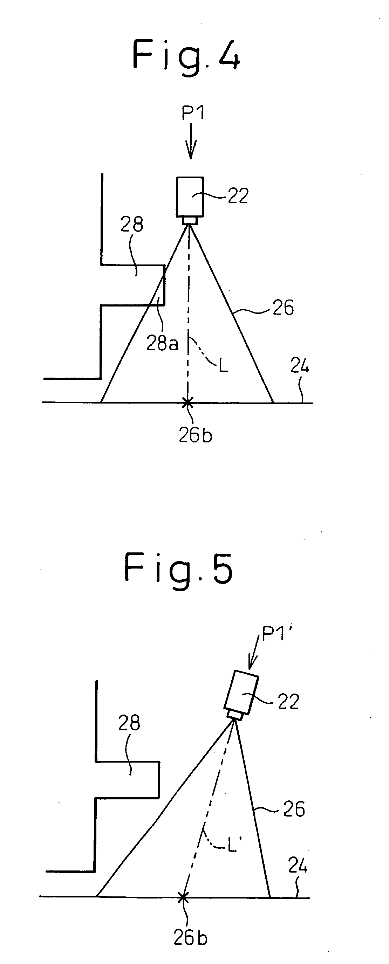

Next, as shown in Fig. 4, an image of a model of an article 28, such as external equipment or structures around the object 24, is indicated on the display 12, whereby the occurrence of interference between the object 24 and the article 28 is checked when the camera 22 is positioned at a teaching point P1 (step S3). The check is based on whether at least a part of the article 28 is positioned within a space defined by the modeled scope 26. Concretely, in case as shown in Fig. 4, a part 28a of the article 28 is included in the space of the modeled scope 26. Therefore, it is expected that the actual measurement of the object 24 using the actual camera 22 is affected due to the external equipment or a structure represented as the article 28 at least partially positioned within the scope of the camera 22. Such a case is judged as "Interference".

When the judgment result of step S3 is "Interference", the position of the teaching point P1 or the position of the camera 22 is changed so as to avoid interference (step S4). Concretely, as shown in Fig. 2, a tool center point (TCP) 26b is temporarily positioned at the center of an imaging area or surface 26a of the scope 26. Then, the operator operates a jog key or the like (not shown) so as to change the position and/or the orientation of the camera, such that a view line L extending from the camera 22 to the TCP 26b is changed to a view line L', as shown in Fig. 5. In other words, the teaching point P1 is corrected to another teaching point P1'. Instead of the operation of the jog key by the operator, the position of the teaching point may be automatically corrected based on a predetermined algorithm.

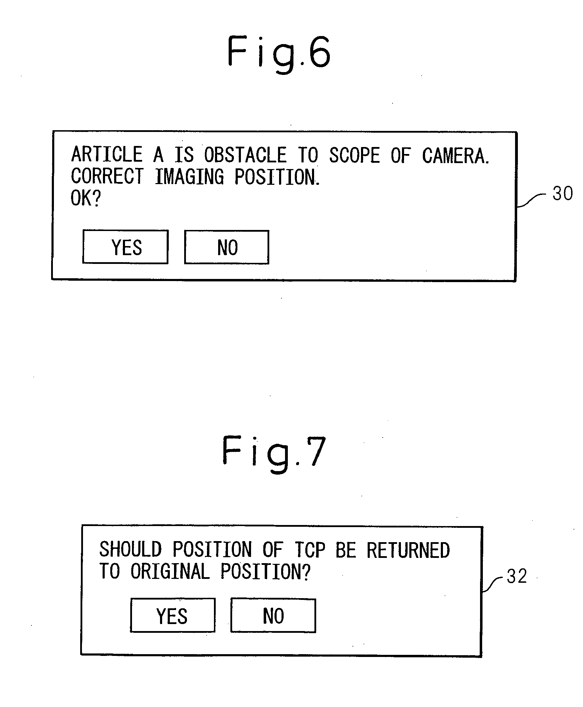

When the judgment in step S3 is "Interference", the teaching point may be consistently changed. However, as shown in Fig. 6, for example, a window 30, for asking the operator to change the imaging position of the camera, may be indicated on the display 12, by which the change of the imaging position may be carried out interactively. In the case of Fig. 6, the operator may operate the jog key after selecting "yes" on the window.

After the correction of the teaching point, another window 32 as shown in Fig. 7 is preferably indicated so as to return the TCP to its original position. The TCP is returned to the original position after selecting "yes" on the window 32.

When step S4 is completed, the procedure progresses to step S5. On the other hand, if the judgment in step S3 is "No interference", the procedure progresses to step S5 without performing step S4. In step S5, it is judged whether all statements in the robot program have been executed (i.e., the simulation is completed). If yes, the procedure is terminated. Otherwise, the procedure is repeated from step S1.

According to the simulation device for the robot of the present invention, interference of an article with the scope of the vision sensor may be previously checked by off-line simulation. Further, when the interference occurs, the teaching operation may be carried out to avoid interference during the off-line simulation. Therefore, an operation for correcting the robot program in the field is unnecessary and the number of man-hours and the workload on the operator in the field may be greatly reduced.

While the invention has been described with reference to specific embodiments chosen for the purpose of illustration, it should be apparent that numerous modifications could be made thereto, by one skilled in the art, without departing from the basic concept and scope of the invention.

## Claims

1. A simulation device (10), for a robot (18), for simulating the motion of the robot (18) off-line and the detection of an object (24) by means of a vision sensor (22), **characterized in that** the simulation device (10) comprises:
a display means (12) for indicating images of the object (24), the vision sensor (22) and an article (28) around the robot (18), and an image of a modeled scope (26) of the vision sensor (22); and
a judging means (10) for judging whether the article (28) around the object (24) interferes with the modeled scope (26) of the vision sensor (22), based on the images indicated on the display means (12).

2. The simulation device according to claim 1, further comprising a correcting means (10) for correcting the position of the image of the vision sensor (22) on the display means (12) so as to avoid interference between the article (28) around the object (24) and the modeled scope (26) of the vision sensor (22), when the judging means (10) judges that the article (28) around the object (24) interferes with the modeled scope (26) of the vision sensor (22).
